# EUROPEAN PATENT APPLICATION

(11) **EP 4 682 793 A1**
(43) Date of publication of application: **21.01.2026**
(21) Application number: 24189521.8
(22) Date of filing: 18.07.2024
(51) Int. Cl.: G06Q 10/0635, G06Q 10/10, G06F 11/34

(54) **INTERACTIONS WITH HAZARD INDICATIONS**

(71) Applicant: FYLD Limited, London EC4A 3TW (GB)
(72) Inventor: COPSEY, Shelley, Nottinghamshire, LE12 6UZ (GB)
(74) Representative: Zacco UK Ltd

(57) **Abstract**

The present invention relates to a computer-implemented method for determining whether a user is sincere based on their interaction with a displayed indication of a potential hazard at a jobsite. The method comprises obtaining risk assessment data indicating a potential hazard at a jobsite. Then, an indication of the potential hazard is caused to be displayed on a display with which a user can interact. The method comprises analysing a user interaction with the displayed indication of the potential hazard to determine whether the user is sincere based on the user interaction.

## Description

The present disclosure relates to improving safety at a jobsite by determining whether a field worker at a jobsite has interacted with a displayed indication of a potential hazard at the jobsite in a genuine, or sincere, or conscientious way. The present disclosure further relates to a method for generating training data to be used by a machine learning model. The method may be performed by a processor executing instructions stored on a machine-readable medium. The method may be suitable to be executed by a risk assessment system comprising one or more mobile computing devices and/or a remote server.

### BACKGROUND

In general, industries such as but not limited to, construction industries, energy and utilities industries, or the like, involve day-to-day work (also referred to as field work, field operations, or the like) to be performed at a location/work site. The work at the location has to be performed in compliance with field work management requirements defined based on state, local, and federal laws, a type of work, a work site, and so on. The field work management requirements include multiple regulations, codes and standards with regard to health and safety of workers, environmental protection, and quality management.

Ensuring that field workers are taking hazards seriously will contribute to a safer jobsite.

### SUMMARY OF THE INVENTION

The following statements summarise some aspects and embodiments of the disclosed technology, however, the scope of the invention is as defined by the accompanying claims.

According to the disclosure there is provided a computer-implemented method comprising obtaining risk assessment data indicating a potential hazard at a jobsite, causing an indication of the potential hazard to be displayed on a display with which a user can interact, and analysing a user interaction with the displayed indication of the potential hazard to determine whether the user is sincere based on the user interaction. Herein, the determination as to whether the user is sincere should be considered synonymous with determining whether the user's action is sincere based on their interaction with the displayed indication of the potential hazard. This may comprise determining whether the user (e.g. whether their action) is at least one of: conscientious, genuine, honest, earnest, diligent, dedicated, diligent, attentive, rigorous, careful, strict, thorough and/or serious (these may be considered synonymous with "sincere" in some examples).

Analysing the user interaction with the displayed indication of the potential hazard may comprise using a machine learning model trained based on historic data relating to user interactions with displayed indications of potential hazards to output whether the user is sincere, the machine learning model receiving data relating to user interactions as input.

Analysing the user interaction with the displayed indication of the potential hazard may comprise determining a quality metric indicating whether the user is sincere based on the user interaction.

The computer-implemented method may further comprise comparing the quality metric to a predetermined threshold, and determining whether the user is sincere may be based on the comparison.

The display may comprises a touch screen and the user interaction with the displayed indication may comprise a touch gesture on the display screen.

The user interaction with the displayed indication of the potential hazard may comprise a plurality of user interactions, and determining whether the user is sincere may be based on the time between two user interactions.

Determining whether the user is sincere may be based on a determined amount of time that the user viewed the displayed indication of the potential hazard before interacting with the displayed indication of the potential hazard.

The user interaction with the displayed indication of the potential hazard may comprise an indication that the user has confirmed or accepted the potential hazard as genuine, or an indication that the user has dismissed or rejected the potential hazard as genuine.

Determining whether the user is sincere may be based on an amount of text in the displayed indication of the potential hazard.

The displayed indication of the potential hazard may comprise a set of control measures, each control measure may indicate a step to mitigate the potential hazard.

The computer-implemented method may comprise causing the set of control measures to be displayed for the potential hazard upon the detection of user input indicating that the potential hazard, to which the set of control measures relate, is confirmed.

Determining whether the user is sincere may be based on whether the user has modified or removed a control measure.

Determining whether the user is sincere may be based on user interaction data relating to a historic user interaction with a displayed indication of a potential hazard

The data relating to the historical user interaction may comprise a plurality of historic interactions with displayed indications of potential hazards.

The data relating to the historical user interaction may comprise a number of historic interactions with displayed indications of the same type of potential hazard.

The computer-implemented method may comprise receiving data relating to the user interaction from a component of a mobile device. The mobile device may comprise the display.

Determining whether the user is sincere may be based on a number of hours that the user has worked or a number of hours that has elapsed since the user started their shift.

If it is determined that the user is sincere, the method may comprise determining that the potential hazard indicated by the risk assessment data is a genuine hazard.

Determining that the potential hazard is a genuine hazard may comprise storing the risk assessment data with metadata labelling it as suitable training data for a machine learning model trained to output risk assessment data indicating potential hazards.

According to an example of the disclosure there is provided a device configured to perform the method as described above.

According to an example of the disclosure there is provided a non-transitory computer-readable medium storing instructions that, when executed by a processor, causes the processor to perform the method as described above.

According to an example of the disclosure there is provided a computer-implemented method for generating training data to be used to train a machine learning model. The method comprises obtaining risk assessment data indicating a potential hazard at a jobsite, obtaining user interaction data indicating the way in which a user interacted with a displayed indication of the potential hazard, and storing the risk assessment data as training data if the user interaction data indicates that the user was sincere.

The user interaction data may comprise a quality metric indicating whether the user was sincere based on their interaction with the displayed indication of the potential hazard.

Obtaining the user interaction data may comprise analysing a user interaction with the displayed indication of the potential hazard to determine whether the user is sincere based on the user interaction.

The computer-implemented method may comprise causing the indication of the potential hazard to be displayed on a display with which a user can interact.

The user interaction data may indicate at least one of:
- how a user interacted with a touchscreen;
- the time between user interactions;
- an amount of time that a user viewed the displayed indication of the potential hazard before interacting with the displayed indication of the potential hazard;
- an amount of text in the displayed indication of the potential hazard;
- an amount of time that a user spent viewing the displayed indication of the potential hazard relative to an amount of text in the displayed indication of the potential hazard.
- the way in which a user interacted with a displayed indication of the potential hazard relative to a historic user interaction with a displayed indication of a potential type of hazard;
- the way in which a user interacted with a displayed indication of the potential hazard relative to a historic user interaction with a number of displayed indications of the same type potential type of hazard;
- whether any anomalies are determined in the behaviour of the user;
- a number of hours that the user has worked or a number of hours that has elapsed since the user started their shift.

The displayed indication of the potential hazard may comprise a set of control measures, each control measure may indicate a step to mitigate the potential hazard, and the user interaction data may indicate whether the user has modified or removed a control measure.

According to an example of the disclosure there is provided a device configured to perform the method as described above.

According to an example of the disclosure there is provided a non-transitory computer-readable medium storing instructions that, when executed by a processor, causes the processor to perform the method as described above.

### BRIEF DESCRIPTION OF THE DRAWINGS

The above and other aspects will now be described in more detail, with reference to appended figures. The figures should not be considered limiting; instead they are used for explaining and understanding.

As illustrated in the figures, the sizes of layers and regions may be exaggerated for illustrative purposes and, thus, are provided to illustrate the general structures. Like reference numerals refer to like elements throughout.
Fig. 1 illustrates a risk assessment system and a fieldworker interacting with a mobile computing device of the risk assessment system at a jobsite comprising a plurality of hazards;
Fig. 2 is a block diagram of a method for determining whether a user is sincere based on their interaction with a displayed indication of a potential hazard;
Fig. 3 is a block diagram showing steps of a method that may be used in conjunction with the method of Fig. 2;
Fig. 4 is a block diagram showing steps of a method that may be used in conjunction with the method of Fig. 2 and/or the method of Fig. 3.
Figs. 5A-5F show examples of a mobile device being caused to perform some steps of the methods described by the present disclosure; and
Fig. 6. is a block diagram showing a method for generating training data to be used to train a machine learning model.

### DETAILED DESCRIPTION

The present invention will now be described more fully hereinafter with reference to the accompanying drawings, in which currently preferred embodiments of the invention are shown. This invention may, however, be embodied in many different forms.

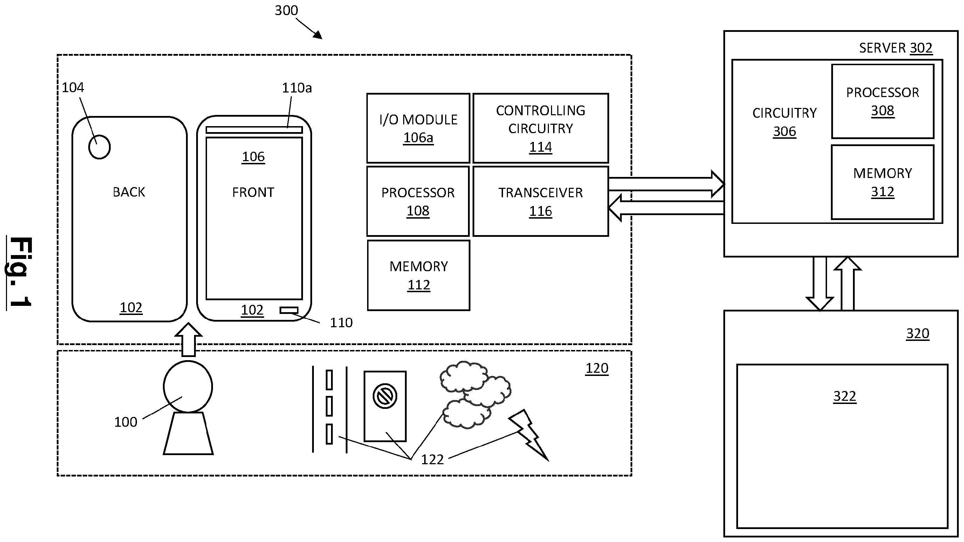

In connection with Fig. 1 general concepts of risk assessment using a mobile computing device 102 associated with a fieldworker 100 will be discussed, these concepts being useful to understand the methods described herein. Herein, the terms "fieldworker" and "user" are used synonymously in certain contexts. The fieldworker 100 may capture an audio-visual presentation of a jobsite 120 using the mobile computing device 102. The audio-visual presentation comprising both video and audio data. The video data comprises visual information in a series of frames. The audio data comprise audio information. Risks may be assessed based on the video data, the audio data or both. A video to be used for video risk assessment, which may hereinafter be referred to as a "VRA", and may be used to refer to a captured audio-video presentation of the jobsite (the terms being synonymous in some contexts), is typically the order of minutes in duration. Especially, the duration of the video for VRA shall be sufficiently long for the fieldworker 100 to indicate hazards that they can see and any other notable things that they can see or know about the jobsite.

Fig. 1 shows an example field worker 100, who will capture a video at a jobsite 120 in order for a video risk assessment to be performed. Figure 1 depicts an example mobile computing device 102 comprising a video module 104. The video module 104 comprises a video recorder configured to record video. In this example, a lens of the video recorder is shown on the back of the mobile computing device 102. Fig. 1 also shows the front of the mobile computing device 102 which in this example comprises a display 106. The mobile computing device 102 may additionally or alternatively include a lens of the video recorder on the front side - for example, to allow a field worker 100 to capture video including their face using a front-facing camera. Further, the mobile computing device 102 typically also comprise a microphone 110 configured to record audio. In order for the video module 104 to capture both video data and audio data it typically comprises both the video recorder (having either a back-facing camera, a front-facing camera or both) and the microphone 110. The mobile computing device 102 may further comprise a speaker 110a configured to play audio.

The mobile computing device 102 comprises a processor 108 and memory 112. The memory 112 comprises an operating system configured to operate the mobile computing device 102. The memory 112 may store one or more mobile applications. For example a video risk assessment, VRA, application.

The mobile computing device 102 may be a mobile phone, a tablet, a laptop or another suitable mobile computing device. A computing device that the field worker 100 cannot carry around at a jobsite 120 would not be suitable for the present purpose. A computing device moveable on wheels or the like may be used but may not be the most elegant solution to capturing video of a jobsite versus a handheld mobile computing device. The mobile computing device 102 may be a digital camera equipped with a processor 108 and memory 112 such that a mobile application can be run on the digital camera.

The video module 104, typically also including the microphone 110, and the speaker 110a may be operatively connected to the memory 112 and the processor 108. The mobile computing device 102 further comprise controlling circuitry 114 configured to control operations of the mobile computing device 102. The controlling circuitry 114 is further configured to execute functions to be performed by the mobile computing device 102. One or more such functions may be in the form of steps of a method presented in this disclosure. The mobile device 102 comprise a transmitter and receiver or transceiver 116 configured to send and receive digital signals. The display 106 may comprise or be provided additionally to an I/O module 106a, which may comprise a keyboard or touchscreen to allow a user to input information into the mobile computing device 102. The I/O module 106a may comprise the display 106 and the speaker 110a, for example, such that information can be presented to the user as an output of analysis. The information may take the form of text, graphical representations such as charts or diagrams, or audio - for example a spoken message in a relevant language to the user or sounds such as bells or alarms or the like. The microphone 110 may be part of the I/O and may allow to field worker 100 to control operations of the mobile computing device 102 using voice commands, for example.

In Fig. 1, the jobsite 120 is shown comprising three example hazards 122: cloudy weather (which may indicate that rain will fall at the jobsite or may reduce visibility), an area where entry is prohibited, a road and an electrical hazard, for example power lines. These are merely examples of hazards that could occur at a jobsite 120 that would affect how a job is carried out. The field worker 100 may capture an audio-visual presentation of the jobsite 120 including one or more hazards. For video risk assessment purposes, the field worker 100 may spend time showing a hazard in detail (from a safe distance or in a safe manner) or may narrate their audio-visual presentation to indicate that they have perceived the hazard - for example "I am showing a road that passes close to the jobsite. I have observed that the road is currently busy".

The mobile computing device 102 is typically part of a risk assessment system 300 also comprising a remote server 302.The remote server 302 may be a single server device. Alternatively, the remote server 302 may be a cloud-based server. The remote server 302 comprises circuitry 306, a processor 308 and a memory 312. The circuitry 306 is configured to execute different functions to be executed by the remote server 302. One or more of such functions may be in the form of steps of a method presented in this disclosure. Further, functions forming steps of a method presented in this disclosure may be executed partly by the controlling circuitry 114 of the mobile computing device 102 and partly by the circuitry 306 of the server 302. Results from a function executed by the controlling circuitry 114 of the mobile computing device 102 may be used by a function executed by the circuitry 306 of the server 302 and vice versa. For example, functions for providing an output to the fieldworker 100 is typically executed by the controlling circuitry 114 of the mobile computing device 102. The mobile computing device 102 is connectable to the remote server 302 using a communication network. The communication network is typically a wireless network such as a cellular network, or a Wi-Fi network.

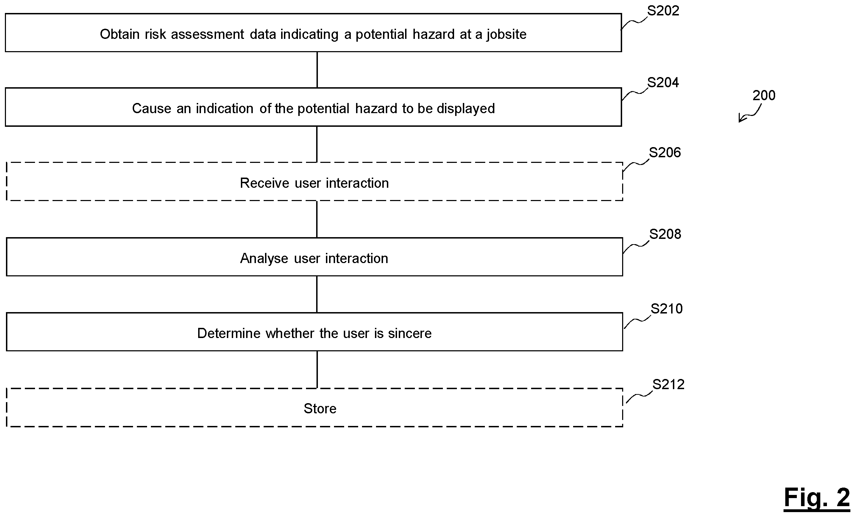

Figure 2 shows an example computer-implemented method 200. At S202 the method comprises obtaining risk assessment data indicating a potential hazard at a jobsite. At S204 the method comprises causing an indication of the potential hazard to be displayed on a display with which a user can interact. At S208 the method comprises analysing a user interaction with the displayed indication of the potential hazard to determine, S210, whether the user is sincere based on the user interaction.

The risk assessment data, obtained at S202, may comprise any indication of a potential hazard at the jobsite. S202 may comprise receiving the risk assessment data, e.g. from another entity. S202 may comprise retrieving the risk assessment, e.g. from a memory. S202 may also comprise determining risk assessment data, e.g. from other data. The risk assessment data may comprise any suitable indication of a potential hazard, including an image of the hazard itself or any other data that could be used to infer the presence of a potential hazard (e.g. audio data describing the hazard). In one example, a worker at a jobsite captures an audio-visual presentation of the jobsite, e.g. using their mobile device. Such an audio-visual presentation may constitute the risk assessment data indicating the potential hazard or may be used to determine risk assessment data. The risk assessment data may be the output of a machine learning model (to be discussed below).

At S204 an indication of the potential hazard is caused to be displayed on a display with which a user can interact. The display may be the display of the user's mobile device. Any indication sufficient to communicate the existence of a potential hazard at the jobsite may be caused to be displayed at S204, which accordingly may comprise causing a graphic indication of the presence of a potential hazard (e.g. a symbol, such as an "X" or a "!"), a graphic indication of the potential hazard itself (a picture of the hazard or an otherwise visual representation of the hazard, such as a spark indicating a potential electrical hazard or a grey cloud/raincloud indicating bad weather etc.), text listing the type of potential hazard (e.g. "rain" or "rain imminent"), or text describing a type of potential hazard (e.g. "wet weather imminent" or "warning - risk of damage due to wind"), or any combination of these (e.g. a graphic symbol and accompanying text etc.). It will be appreciated that the potential hazard may be known to be present at the jobsite or may not known for certain but predicted, or inferred, to be present, the indication of the potential hazard being displayed in any case.

The method may comprise generating the indication, e.g. based on stored data. In this example, a database may be maintained of representations of potential hazards to be displayed and, upon obtaining the risk assessment data at S202, the database may be accessed to retrieve the indication (e.g. using a lookup table) to then cause it be displayed to the user on the display.

The indication of the potential hazard may comprise a set of control measures, and causing, S204, the indication to be displayed may comprise causing a step of control measures to be displayed to the user. A control measure may be considered any step that, if taken, would contribute at least in some way to mitigate the potential hazard. In this way, what is caused to be displayed to the user, at S204, may be a step that, if taken, would mitigate the potential hazard somewhat rather than an indication of the potential hazard itself (e.g. "make sure all electrical equipment is adequately protected from rain" as opposed to "wet weather incoming") although of course in practice the displayed indication could be a combination of both. In any case, the control measure or set of control measures may be retrieved from a database, or received from another entity (e.g. transmitted from another device or from a server etc.).

Depending on what entity implements the method 200, S204 may comprise transmitting a signal from one entity to a device comprising the display which, on receipt of the signal, causes the device to display the indication of the potential hazard. This signal may contain the information to be displayed or it may be a signal that prompts the device to retrieve (e.g. from its memory) the indication to be displayed. So, for example, one device (such a server device) may obtain risk assessment data and transmit a signal that causes a mobile device of a user to display an indication of a potential hazard (as indicated by the risk assessment data). Similarly, the risk assessment data may be obtained, S202, by the device that comprises the display screen and/or a device that causes the indication of the potential hazard to be displayed, or the risk assessment data may be obtained by a first device that transmits a signal to a second device (that may cause the indication to be displayed at a display screen of the second device, or of a further device) Of course, in some examples, each step of the method may be performed by a single device (such as a mobile device).

At S206 a user interaction with the displayed indication of the potential hazard is analysed. The user interaction may comprise any detected interaction by the user toward, or proximate, the displayed interaction of the potential hazard. Such an indication may comprise a detected movement by any part of the user, for example their hands, fingers, face. The detected movement may, or may not, be the result of the user touching the display. In one example, the user may interact with the displayed indication of the potential hazard by touching the display, for example the part of the display displaying the hazard, with their hand or fingers. This may be a short interaction such as the user tapping or swiping the display etc. or may be a longer interaction such as the user tapping the screen and then subsequently interacting with the display or long-pressing the screen etc.

The user interaction may be indicative of a user intention and/or of a function of the mobile device. For example, a user tapping the indication of the potential hazard may be associated with the user accepting the indication of the potential hazard as genuine, or may be associated with the user wishing to view more information about the potential hazard. The user swiping the indication of the potential hazard may, in some examples, be associated with the user dismissing the indication. In each case, a user interaction with the displayed indication results in the device performing a subsequent function (e.g. the user tapping may cause more information about the potential hazard to be displayed, the user swiping may cause the indication about the potential hazard to be removed from the display) and the association between such interactions and subsequent functions may be stored in a database or memory of the device comprising the display.

User interaction data may be received from another entity or retrieved from storage (e.g. from an internal memory). In one example S206 may comprise using internal components of a device comprising a display on which the indication of the potential hazard was displayed, e.g. to determine one or more of: a user's movements proximate the device, whether the user touched the device, and how the user touched the device. This may comprise data from a device configured to sense user interactions with a display screen (such as a capacitive touch screen).

As mentioned above, the indication of the potential hazard may comprise a set of control measures to mitigate that hazard and therefore, the user interaction with the displayed indication may comprise a user interaction with one or more control measures. In such examples, how the user has interacted with a displayed control measure may be analysed (e.g. have they modified or removed any). This will be described below.

The indication of the potential hazard may comprise a notification, e.g. a pop-up notification or push notification. Causing the indication to be displayed may comprise causing an app or webpage to be automatically opened, the app or webpage containing the indication. The user indication may be modifiable. As will be explained in more detail elsewhere, the user interaction may comprise a user modifying the indication, and analysing the user indication may comprise determining how the user has modified the indication.

Analysing the user interaction may be performed based on further information. As such, the analysis may be based on at least one of an amount of time the displayed indication has been displayed on the display before the user interacted with it (which may be synonymous with an amount of time a user viewed the displayed indication of the potential hazard before interacting with the displayed indication of the potential hazard). In this example, a user viewing the displayed indication for a relatively short amount of time may be synonymous with a user not taking the potential hazard seriously. On the other hand, a user viewing the displayed indication for a relatively long amount of time may be synonymous with a user taking the potential hazard seriously. The method may therefore determine an amount of time that the user has viewed the displayed indication of the potential hazard before interacting with it and comparing that time to a predetermined threshold to determine whether that time is "long enough." The predetermined threshold in these examples being stored and being relative to the type of potential hazard.

Alternatively, or additionally, the analysis may be based on an amount of text present in the displayed indication of the potential hazard. This may additionally consider an amount of time that the user has viewed the displayed indication before interacting with it, as described above. For instance, if a displayed indication was a single symbol then the user interacting with it quickly may not indicate whether the user has taken the displayed indication seriously, however if the displayed indication comprises a large amount of text and the user has interacted with it quickly then this may be an indication that the user has not taken the indication seriously as the quick interaction may indicate insufficient time for the user to have properly read and considered the text. Therefore, in one example S208 may comprise determining an amount of time a user has viewed a displayed indication of a potential hazard relative to an amount of text in the displayed indication. This time may be compared with a predetermined threshold to determine whether the user is sincere. The predetermined threshold in this example being based on the type of potential hazard and/or an amount of text in the indication.

Alternatively, or additionally, the analysis may be based on the time between two user interactions. These interactions may be successive. In this example, it may be determined how long a user has considered the indication of the potential hazard before interacting with it following an initial interaction (that may have corresponded to the user requesting further information about the potential hazard or confirming it in some way). This may also take into account an amount of text present in the displayed indication and the amount of time may also be compared to a predetermined threshold to determine whether the user is sincere, the predetermined threshold being based on the type of potential hazard and/or an amount of text in the indication.

Alternatively, or additionally, the analysis may be based on an indication of the user that corresponds with their accepting or rejecting of the interaction and/or potential hazard. For example, a first gesture (such as a tap or double tap or a swipe downwards) may be associated with the acceptance of the potential hazard and/or a desire to view further information about that potential hazard (following which the device comprising the display may perform a subsequent function, such as causing another page, or further information, to be displayed) and a second gesture (such as a swipe to the left, right, or upwards) may be associated with the user wishing to reject, or dismiss, the potential hazard, which may indicate that the potential hazard is not present at the jobsite or that the user wishes to no longer see the displayed indication. In some examples, it may be determined that a user performing an interaction associated with them no longer wishing to view the indication is not sincere.

Alternatively, or additionally, the analysis may be based on whether the user has modified or removed a control measure. In examples where the displayed indication of the potential hazard comprises a control measure to at least, in party, mitigate the potential hazard, it may be determined whether the user has removed that control measure. It may be determined whether the user has modified the control measure. For example, a user modifying the control measure may constitute an indication that the user has taken the potential hazard seriously since they are actively interacting with the information concerning the hazard's mitigation. A user removing a control measure may also constitute an indication that the user has taken the potential hazard seriously since they may be removing a control measure that would not, in fact, mitigate the potential hazard if taken.

Alternatively, or additionally, the analysis may be based on a comparison to historic interactions. Alternatively, or additionally, the analysis may be based on a plurality of historic interactions with displayed indications of potential hazards and/or a number of historic interactions with displayed indications of the same type of potential hazard. In these examples, a user's interaction may be put into context relative to a historic interaction, which may be that of the same user, or another user, and may be that relating to the same type of potential hazard or indeed to a different hazard.

It will appreciated that to the extent that a user interaction leads to the determination that a user is a sincere or not may therefore be dependent on the example and/or on a practical implementation of the method, and may also be dependent on any number of the factors discussed above.

The analysis may, alternatively or additionally, be based on other factors. For instance, the analysis may be based on whether a user has removed a hazard that was predicted, e.g. by a machine learning model, with a high confidence, or even confirmed by multiple machine learning models. In this way, in some examples of this disclosure, a displayed indication of a hazard may be associated with a confidence level which may or may not be displayed to the user along with the indication of the hazard. If a user has removed a hazard with a high confidence model then this may indicate that the user action is not sincere.

As discussed above, the analysis and determination may be based on a comparison to a predetermined threshold. For instance, a user may firstly tap a displayed indication of a potential hazard which may cause a subsequent indication to be displayed, which comprises 30 words of text concerning the potential hazard, and 5 seconds may pass before the user interacts with the display again. A predetermined threshold of, say, 4 seconds may be set based on the word count of 30 and the user's time between interactions being greater than this predetermined threshold of 4 may lead to a determination that they are sincere in this example. On the other hand if the word count was 100 and 5 seconds passed between interactions then this may not be above the predetermined threshold which would be higher in this example.

At S210 it is determined whether the user is sincere. As stated above, this should be considered synonymous in this document with determining whether the user's action is sincere based on their interaction with the displayed indication of the potential hazard and may comprise determining whether the user (e.g. whether their action) is at least one of: conscientious, genuine, honest, earnest, diligent, dedicated, diligent, attentive, rigorous, careful, strict, thorough and/or serious (these may be considered synonymous with "sincere" in some examples). The determination as to whether the user (or their action) is sincere (or similar) may comprise determining whether the user has interacted with the displayed indication of the potential hazard in such a way so as to have seriously considered, or taken seriously, the indication. The determination may comprise determining whether the user has interacted with the displayed indication of the potential hazard in such a way as to indicate that the user has ignored, dismissed, rejected, or otherwise not taken the indication seriously. By way of example, as discussed above, certain user interactions may indicate that the user is not taking the indication of the potential hazard seriously, such as (but not limited to) a swipe gesture (which may indicate that the user does not want to view the indication) or any gesture performed within a predetermined threshold amount of time relative to an amount of text that is part of the displayed indication (which may indicate that the user could not have properly read all of the text before interacting with it) etc. Alternatively, certain user interactions may indicate that the user is taking the indication of the potential hazard seriously, such as (but not limited to) a gesture such as a tap or double tap (which may indicate that the user wants to view more information about the potential hazard), or over a predetermined threshold amount of time elapsing between user interactions (which may indicate the user considering the potential hazard before subsequently performing a further action). As above, these may be considered in relation to other factors (such as amounts of text or historic data, e.g. on user behaviour etc.).

By the determination that a user is sincere, it is therefore meant that the user is conscientious, in the sense that some user interactions may indicate that a user is seriously considering that a hazard could be present at a jobsite. In other words, some user interactions may indicate that the user is taking safety at the jobsite seriously.

Of course, the user interacting with the indication of the potential hazard in a "meaningful" way may not necessarily be synonymous with the potential hazard being a genuine hazard. For instance, an indication that there is an electrical hazard at a jobsite may be ignored by the user who may not interact with the indication at all or may dismiss it quickly by a swipe gesture or may even tap the indication to then delete or remove it in such a short period of time that indicates that the potential hazard was barely considered. In this example there may be a genuine electrical hazard at the jobsite but the user's interaction indicates that they did not take the displayed indication of the hazard seriously. On the contrary, a conscientious (or sincere, or genuine etc.) user may tap an indication of a fire hazard notification on a display (perhaps to view more information about the hazard), and the amount of time the user is determined to have viewed the indication of the hazard (perhaps relative to an amount of text about it, or based on the time between their next interaction with the display) means that they are taking the hazard seriously, even if a subsequent investigation determines that, in fact, no fire hazard is present. What is therefore determined by the method is whether the user interaction indicates a sincere (or conscientious etc.) intention of the user to view the indication of the potential hazard.

As indicated by the dotted box, the method may comprise, at S206, receiving user interaction data. For instance, S202 and/or S204 may be performed at a device having the display or at a different device. In any case, once the user has interacted with the potential hazard indication on the display, step S208 may be performed by the device having the display, alternatively the device having the display may transmit data concerning the user interaction, e.g. to another device (such as a server device), which may receive, S206, the data and analyse, S208, the data to determine, S210, whether the user is sincere.

A machine learning model may perform any one or more of the steps of the method 200. In one example, analysing, S208, comprises using a machine learning model trained based on historic data relating to user interactions with displayed indications of potential hazards (which may be referred to as "user interaction data"). Such a machine learning model may receive data relating to the user interaction as input. Such a machine learning may be configured to output, S210, an indication or determination of whether the user is sincere (or conscientious or genuine etc.). Such a machine learning module may be trained on user interaction data of the type discussed above having some indication that the data constitutes a sincere behaviour or not.

As indicated by the dotted box, the method may comprise, at S212, storing the data. In one particular example of S212 the data may be stored if it is determined, S210, that the user is sincere. This may, in some examples be synonymous with a determination that the potential hazard indicated by the risk assessment data is a genuine hazard. More specifically, at S202 risk assessment data is obtained indicating a potential hazard at a jobsite, an indication of which is provided to a user who interacts with it in some way. If the user has interacted with the indication in such a way determined to be genuine, and (optionally) if the user's interaction confirms the hazard to be genuine or present in some way, this may constitute a reliable indicator that the potential hazard indicated by the risk assessment data is, in fact, an actual hazard. This effectively provides a way of conforming whether the original risk assessment data does, in fact, indicate a genuine hazard (as opposed to merely a potential one) and so the risk assessment data could be stored, for example, with metadata noting that this risk assessment data indicates a genuine hazard. Such data is suitable for training data for a machine leaning model that is configured to output risk assessment data based on receiving certain inputs,.

In one example, such a machine learning model may receive, as input, a captured audio-visual presentation of a jobsite, possibly in addition to site-specific context data. This machine learning model may be trained to output potential hazards based on video data and/or audio data and/or context data (e.g. the inputs to the model). This machine learning model may be trained on data like the data described above with reference to S212, e.g. trained on historical data of user interactions (e.g. confirming or removing) with hazards. Thus, data that is known to indicate a genuine hazard (which may be determined by the method 200) is suitable training data for such a model. Accordingly, S212 may comprise storing the risk assessment data with metadata labelling it as training data and/or may comprise storing the risk assessment data in a training data database.

It follows that, in some examples, S202 may comprise using such a model. In other words, the risk assessment data obtained at S202 may be the output of such a machine learning model. As stated above, the risk assessment data may comprise an audio-visual presentation of the jobsite or, as will be the cause when S202 comprises using a machine learning model, may be derived from such an audio-visual presentation of the jobsite. More specifically, in one example, the method may comprise receiving an audio-visual presentation of the jobsite (which may, in one example, comprise enabling a user to capture the audio-visual presentation of the jobsite, e.g. using their mobile device), as discussed above with reference to Figure 1, the audio-visual presentation, or VRA, may then be input to a machine learning model as discussed above whose output is the indication of the potential hazard. The risk assessment data, S202, may therefore comprise the output of a risk assessment module, which may also comprise a machine learning module.

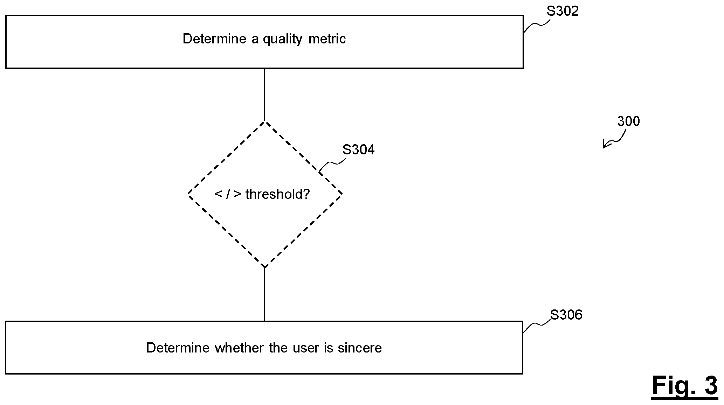

Figure 3 shows steps of a method 300 that may be performed as part of method 200. In this example, analysing the user interaction with the displayed indication of a potential hazard may comprise, s302, determine a quality metric which is then, S304, compared to a predetermined threshold. If the determined quality metric is greater than (or equal to) or less than (or equal to), depending on the example, then it may be determined, S306, whether the user is sincere. The quality metric may therefore be considered an indication of whether the user is sincere. The machine learning model discussed above with respect to S208 and S210 may be used to perform part of the method 300. For instance, a machine learning model trained based on historic data relating to user interactions with displayed indications of potential hazards (which may be referred to as "user interaction data") may receive data relating to the user interaction as input and may be configured to output (e.g. directly), S210, a determination of whether the user is sincere or may be configured to output the quality metric, S302.

As discussed above the analysis of the user interaction may take into account other factors (such as the amount of text that is part of the indication etc). When the method 300 is performed as part of the method 200 the quality metric may be determined, S302, based on the user's interaction and these other factors (such as the amount of text, time between interactions etc.) may be taken into account when setting the predetermined threshold against which the quality metric is to be compared. The predetermined threshold may therefore be based on one or more of the factors listed above such as an amount of text, time between user interactions, user behaviour, historical data etc. The quality metric may be numeric, letters, words or any combination of both. The quality metric may be a number on a number scale (e.g. a rating between 0 and 10).

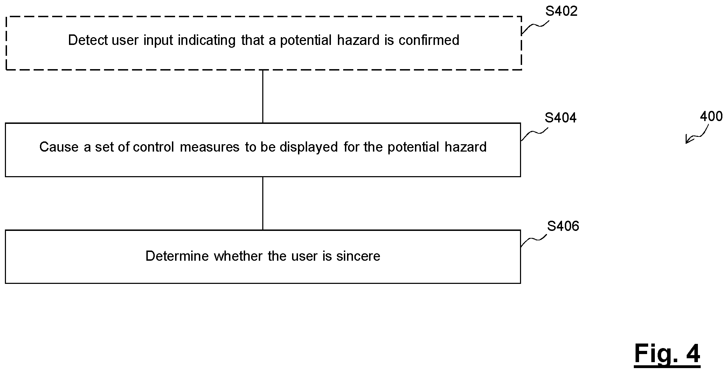

Figure 4 shows further steps that could be used with the method 300 (and the method 200). As stated above, the indication of a potential hazard may comprise a set of control measures. At S404 the method comprises causing a set of control measures to be displayed for the potential hazard (the set may consist of a single control measure such that S404 comprises causing a control measure to be displayed). S404 is to be considered synonymous with S204 in this example, as the control measure(s) constitutes the displayed indication of the potential hazard.

Then, at S406, the method 400 comprises determining whether the user is sincere based on the user interaction with the control measure(s). S406 in this example should be considered as comprising any one or more of S206-S210 and S302-S304, these steps being omitted from the discussion and from Figure 4 only for brevity. Thus, the determination at S406 may be performed following an analysis of the user interaction and may be performed by a machine learning model etc. However, as indicated by the dotted box S402, in one example the control measure(s) are caused to be displayed following some form of user input, S402, in response to an indication of a potential hazard. This input may be considered to be "confirmation" from the user, however the confirmation may not indicate that the potential hazard is genuine (although it of course could) but may constitute an acknowledgement of the indication. In other words, S402 may constitute an input indicating that the user has considered or reviewed the indication. This may be a gesture of the user such as a tap, double tap, swipe etc. or indeed a non-touch gesture (such as a hand or face movement etc.). In more detail, in one example of the method, once risk assessment data has been obtained, S202, an indication of the potential hazard may be caused to be displayed on a display with which a user can interact. For the sake of clarity and understanding this will be referred to as a "primary" indication. Upon some input indication that the user has reviewed, accepted, considered, confirmed etc. the primary indication, at S402, one or more control measures for that potential hazard are caused to be displayed, at S404. The control measure(s) caused to be displayed at S404 will be referred to as a "secondary" indication. The user's interaction with the secondary indication of the potential hazard (being the control measure(s)) is then analysed (e.g. by machine learning and/or a heuristic based model). and it is determined whether the user is sincere based on their interaction with the control measure(s).

In this example, only the user's interaction with the secondary indication of the potential hazard may be analysed to determine whether they are sincere but in another example only the user's interaction with the primary indication of the potential hazard may be analysed to determine whether they are sincere, and in yet another example the user's interaction with the primary and secondary indications of the potential hazard may be analysed to determine whether they are sincere.

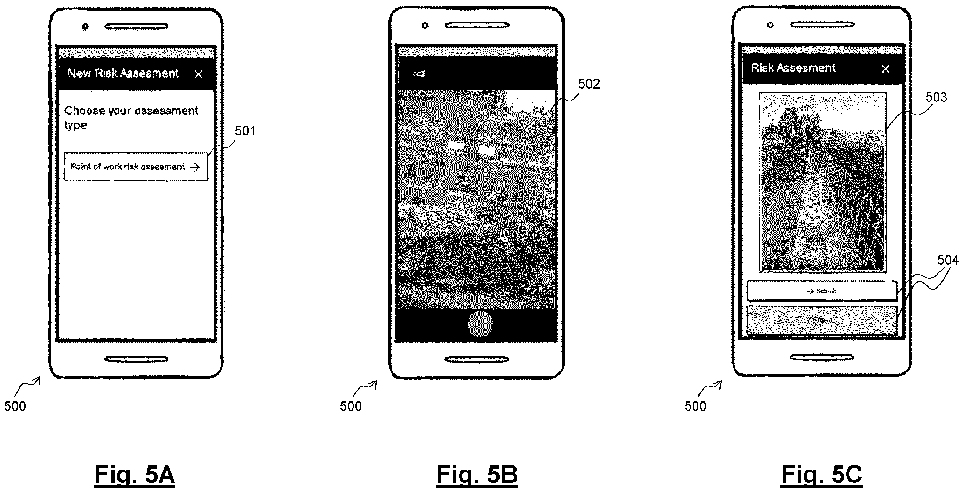

Figures 5A-5E show a display 500, depicted as that of a mobile device, with which a user can interact, at various stages of a process that is in accordance with this disclosure.

Figure 5A indicates a first stage in which a user is prompted to capture an audio-video presentation of their jobsite, in the form of a prompt 501 being displayed on the device 500. Upon the user interacting with the prompt 501 in some way they are enabled to capture the audio-video presentation. This is shown in Figure 5B which snows a snapshot 502 of a live feed of the jobsite being recorded by the user. It will be understood (as described above with respect to Figure 1) that this may also be recording the user's voice, e.g. describing what they see. Figure 5C shows a subsequent stage where the audio-visual presentation of the jobsite (the VRA, shown at 503) has been captured. Buttons indicated at 504 are provided to allow the user to submit their VRA or to re-do it.

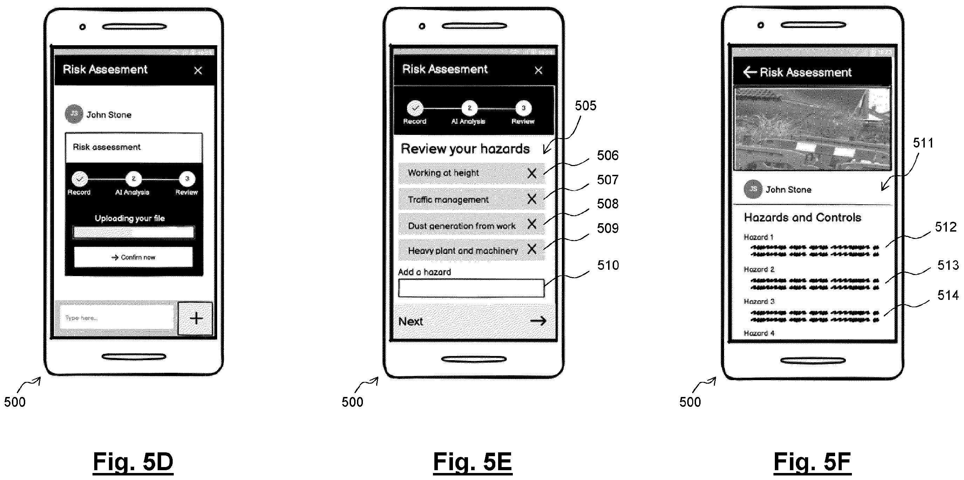

Figure 5D shows the device if the user wished to submit the VRA at which point the device indicates that the VRA is being uploaded. At Figure 5D the user's device analyses the VRA to determine risk assessment data from the VRA. As discussed above, this may involve inputting the VRA into a machine learning model trained to output risk assessment data indicating a potential hazard.

Figure 5E shows a displayed indication of the potential hazards, indicated by the risk assessment data. It will be understood that although Figure 5E is shown as the result of figure 5D (e.g. where the phone analysed a VRA to obtain risk assessment data), the risk assessment data may be received by the device 500 in some examples. In other words, some implementations of the methods described above could start at Figure 5E at which risk assessment data is received and caused to be displayed.

Regardless of how the risk assessment data has been obtained (e.g. retrieved, received or otherwise), 5E shows a primary indication 505 of a potential hazard, as indicated by the risk assessment data. As shown in Figure 5E, the risk assessment data may indicate a plurality of potential hazards which, in this example are: working at height 506, traffic management 507, dust generation from work 508, heavy plant and machinery 509. A user may interact with the primary indication 505 in any number of ways. One way is that the user could interact with the primary indication 505 by adding a hazard, indicated at 510. Such an indication may lead to the determination that the user is sincere since, if the user does not see a hazard they know to be present and are adding that hazard then this may constitute a genuine attempt on their part to increase the safety at the jobsite. As indicated by the X symbols in the individual indications for the potential hazards 506-509 in addition to adding a potential hazard the user may also interact with the X symbol to remove a corresponding hazard. For similar reasons as previously stated this may also lead to a determination that the user is sincere.

Figure 5F shows a secondary indication 511 of a potential hazard, again a plurality of potential hazards in this example. Figure 5F may be displayed following user input which, in this example may be the user tapping the "next" button in Figure 5E, which may constitute an indication that the user has confirmed the list of potential hazards (in the sense that the user could have removed, added, or modified a hazard before indicating that they wanted to proceed. The user interacting with a primary indication in some way may therefore cause a secondary indication to be displayed. Figure 5F shows control measures 512-514 for each hazard. For instance, "Hazard 1" (working at height) is shown to have associated control measures (that may be stored in a database and retrieved in order for the display to be configured as shown in Figure 5F etc.) such as "check scaffolding integrity" and "check presence of another" to ensure the worker's safety. Figure 5F shows the display 500 following a user interaction with the secondary indication of the potential hazard (the control measures). Schematically this is shown as the user "crossing off" or marking each control measure in some way. Such an interaction may mean that the user has reviewed and therefore genuinely considered each control measure and so may lead to a determination that the user is sincere. Of course the user may also interact with the secondary indication of the potential hazards 512-514 in another way, such as adding and/or removing a control measure and/or modifying a control measure. It will be appreciated that any one of the interactions mentioned above with respect to Figures 5D and 5E may be considered alone, or in combination, in the method 200 to determine whether the user is sincere.

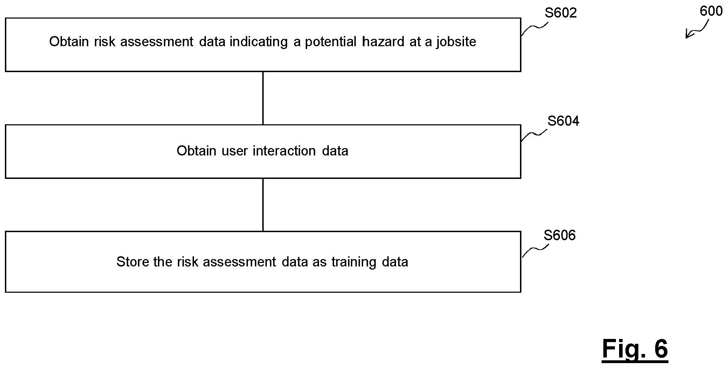

Figure 6 shows a computer-implemented method 600 which may be used in combination with the methods described above or may be a standalone method and which may be considered a hazard prediction model, or part of a hazard prediction model. The method is for generating training data to be used to train a machine learning model, for example the machine learning model discussed above that is to output risk assessment data indicating a potential hazard at a jobsite. At S602 the method comprises obtaining risk assessment data indicating a potential hazard at a jobsite. At S604 the method comprises obtaining user interaction data indicating the way in which a user interacted with a displayed indication of the potential hazard. At S606 the method comprises storing the risk assessment data as training data if the user interaction data indicates that the user was sincere. In some examples of the method the risk assessment data may be stored regardless, but only stored as training data if the prior steps of the method have indicated that the user action is sincere enough to confirm the hazard type. So, in some examples the method 600 comprises storing risk assessment data, and, if data is obtained indicating that the user has added or removed any hazard, this may be used as part of a feedback loop for the process where the process should take this as input and adjust its prediction in examples where the risk assessment data is determined, at least in part, by the process (e.g. if the model predicted hazard X but data was received indicating that the user removed it, the model may learn that their prediction of the hazard X was incorrect). This process allows an additional filter to be applied before the hazard prediction model learns from the interaction, namely the determination of whether the hazard was a genuine hazard.

The risk assessment data may comprise the data discussed above. Therefore, the risk assessment data may comprise any indication of a potential hazard at the jobsite. S202 may comprise receiving the risk assessment data, e.g. from another entity. S202 may comprise retrieving the risk assessment, e.g. from a memory. S202 may also comprise determining risk assessment data, e.g. from other data. The risk assessment data may comprise any suitable indication of a potential hazard, including an image of the hazard itself or any other data that could be used to infer the presence of a potential hazard (e.g. audio data describing the hazard). In one example, a worker at a jobsite captures an audio-visual presentation of the jobsite, e.g. using their mobile device. Such an audio-visual presentation may constitute the risk assessment data indicating the potential hazard or may be used to determine risk assessment data. As explained above, determining the risk assessment data, namely determining the indication of a potential hazard, may be based on prior outputs of the process. In this way the process incorporates a feedback loop so if the process, in one iteration, determines that an indication of a hazard was not correct it may learn from that and if the same phenomenon is subsequently identified the model may have learnt not to label that as the same type of hazard. The risk assessment data may be the output of a machine learning model (e.g. of the type that the method 600 is to generate training data for or indeed the same model that the method 600 is to generate training data for).

As for the method above, the user interaction may comprise any detected interaction by the user toward the displayed interaction of the potential hazard (such as a detected movement by any part of the user, for example their hands, fingers, face, which may, or may not, be the result of the user touching the display). In one example, the user may interact with the displayed indication of the potential hazard by touching the display, for example the part of the display displaying the hazard, with their hand or fingers. This may be a short interaction such as the user tapping or swiping the display or may be a longer interaction such as the user tapping the screen and then subsequently interacting with the display. In another example the user may interact with the displayed indication of the potential hazard by performing a gesture proximate the display, such as a hand movement or facial gesture, that is detectable by the display. In yet another example the user interaction may be a combination of physical and non-physical interactions. The user interaction data may be received from another entity or retrieved from storage (e.g. from an internal memory). The user interaction data may comprise data from a device configured to sense user interactions with a display screen (such as a capacitive touch screen).

Storing, S606, the risk assessment data as training data may comprise storing the risk assessment data with metadata labelling it as training data and/or may comprise storing the risk assessment data in a training data database. Storing, S606, may therefore additionally comprise storing the risk assessment data with a label indicating the mis-identification of a hazard if data indicated that the identified potential hazard was incorrect (e.g. user feedback was received to that effect). In other words, the data may be stored with metadata labelling it as training data and/or containing some other information about the data (e.g. whether it indicates a hazard or not).

The method 600 may comprise analysing the user interaction data, thereby analysing a user interaction with a displayed indication of the potential hazard, to determine whether the user is sincere based on the user interaction and in these examples the analysis. The method 600 may comprise causing the indication of the potential hazard to be displayed on a display with which a user can interact. The user interaction data comprise a quality metric that indicates whether the user is sincere (which may be compared to a predetermined threshold). The indication of the potential hazard may comprise one or more control measures. These steps (analysing user interaction data, causing the indication to be displayed, quality metric, control measures) may be as discussed above with reference to Figures 2-5 and the skilled person will therefore appreciate that the same features and advantages etc. discussed with reference to these figures apply equally to Figure 6.

In general, some or all of the steps of the methods described herein may be implemented as a computer program to be executed in the risk assessment system 300. Some or all of the steps of the methods described herein may be executed at the mobile computing device 102 associated with the fieldworker 100. Some or all of the steps of the methods described herein may be executed at the remote server 302. Some or all of the steps of the methods described herein may be executed at the device 320 associated with the manager. A computer program for implementing the some or all of the steps of the method descried herein may be stored on a non-transitory computer-readable storage medium (e.g. of the mobile computing device 102 and/or of the server 302) and such a medium may store instructions that when executed by a processor (such as a processor 112 of the mobile computing device or a processor 312 of the server) cause the processor to perform the method steps.

Practically, any of the steps of the methods herein may be performed by a module configured to perform that function. For instance, the user interaction may be analysed, S208, by a user interaction analysis module which may, as above, comprise a machine learning module and/or the risk assessment data, S202, may comprise the output of a risk assessment module, which may also comprise a machine learning module etc. For the avoidance of doubt, any modules and models may be considered as a hardware module, a software module, or a combination of both (e.g. a module may be implemented in any suitable combination of hardware and software), including circuitry or processing circuitry. Any steps of the methods described herein may also be performed by a hardware module, a software module, or a combination of both, including circuitry or processing circuitry.

The person skilled in the art realizes that the present invention by no means is limited to what is explicitly described above. On the contrary, many modifications and variations are possible within the scope of the appended claims.

Additionally, variations can be understood and effected by the skilled person in practicing the claimed invention, from a study of the drawings, the disclosure, and the appended claims.

## Claims

1. A computer-implemented method comprising:
obtaining risk assessment data indicating a potential hazard at a jobsite;
causing an indication of the potential hazard to be displayed on a display with which a user can interact; and
analysing a user interaction with the displayed indication of the potential hazard to determine whether the user is sincere based on the user interaction.

2. The computer-implemented method of claim 1, wherein analysing the user interaction with the displayed indication of the potential hazard comprises using a machine learning model trained based on historic data relating to user interactions with displayed indications of potential hazards to output whether the user is sincere, the machine learning model receiving data relating to user interactions as input.

3. The computer-implemented method of claim 1 or 2, wherein analysing the user interaction with the displayed indication of the potential hazard comprises determining a quality metric indicating whether the user is sincere based on the user interaction

4. The computer-implemented method of any preceding claim, wherein the user interaction with the displayed indication of the potential hazard comprises a plurality of user interactions, and wherein determining whether the user is sincere is based on the time between two user interactions.

5. The computer-implemented method of any preceding claim, wherein determining whether the user is sincere is based on a determined amount of time that the user viewed the displayed indication of the potential hazard before interacting with the displayed indication of the potential hazard.

6. The computer-implemented method of claim 5, wherein the user interaction with the displayed indication of the potential hazard comprises an indication that the user has confirmed or accepted the potential hazard as genuine, or an indication that the user has dismissed or rejected the potential hazard as genuine.

7. The computer-implemented method of any preceding claim, wherein determining whether the user is sincere is based on an amount of text in the displayed indication of the potential hazard.

8. The computer-implemented method of any proceeding claim, wherein the displayed indication of the potential hazard comprises a set of control measures, each control measure indicating a step to mitigate the potential hazard, optionally further comprising:
causing the set of control measures to be displayed for the potential hazard upon the detection of user input indicating that the potential hazard, to which the set of control measures relate, is confirmed.

9. The computer-implemented method of claim 8, wherein determining whether the user is sincere is based on whether the user has modified or removed a control measure.

10. The computer-implemented method of any preceding claim, wherein determining whether the user is sincere is based on user interaction data relating to a historic user interaction with a displayed indication of a potential hazard, optionally wherein the data relating to the historical user interaction comprises a plurality of historic interactions with displayed indications of potential hazards, optionally wherein the data relating to the historical user interaction comprises a number of historic interactions with displayed indications of the same type of potential hazard.

11. The computer-implemented method of any preceding claim, wherein determining whether the user is sincere is based on a number of hours that the user has worked or a number of hours that has elapsed since the user started their shift.

12. The computer-implemented method of any proceeding claim, further comprising, if it is determined that the user is sincere:
determining that the potential hazard indicated by the risk assessment data is a genuine hazard; and storing the risk assessment data with metadata labelling it as suitable training data for a machine learning model trained to output risk assessment data indicating potential hazards.

13. A computer-implemented method for generating training data to be used to train a machine learning model, the method comprising:
obtaining risk assessment data indicating a potential hazard at a jobsite;
obtaining user interaction data indicating the way in which a user interacted with a displayed indication of the potential hazard; and
storing the risk assessment data as training data if the user interaction data indicates that the user was sincere.

14. The computer-implemented method of claim 13, wherein obtaining the user interaction data comprises:
analysing a user interaction with the displayed indication of the potential hazard to determine whether the user is sincere based on the user interaction, wherein the user interaction data indicates at least one of:
- how a user interacted with a touchscreen;
- the time between user interactions;
- an amount of time that a user viewed the displayed indication of the potential hazard before interacting with the displayed indication of the potential hazard;
- an amount of text in the displayed indication of the potential hazard;
- an amount of time that a user spent viewing the displayed indication of the potential hazard relative to an amount of text in the displayed indication of the potential hazard.
- the way in which a user interacted with a displayed indication of the potential hazard relative to a historic user interaction with a displayed indication of a potential type of hazard;
- the way in which a user interacted with a displayed indication of the potential hazard relative to a historic user interaction with a number of displayed indications of the same type potential type of hazard;
- whether any anomalies are determined in the behaviour of the user;
- a number of hours that the user has worked or a number of hours that has elapsed since the user started their shift
- whether the user has modified or removed a control measure, the displayed indication of the potential hazard comprising a set of control measures, each control measure indicating a step to mitigate the potential hazard.

15. A device configured to perform the method of any of claims 1-14; or a non-transitory computer-readable medium storing instructions that, when executed by a processor, causes the processor to perform the method of any one of claims 1-14.
